(19) Europäisches Patentamt
European Patent Office
Office européen des brevets

(11) EP 1 920 982 A1

(12) **EUROPÄISCHE PATENTANMELDUNG**

(43) Veröffentlichungstag:
14.05.2008 Patentblatt 2008/20

(51) Int Cl.:
*B60T 8/1755* $^{(2006.01)}$

(21) Anmeldenummer: 07120142.0

(22) Anmeldetag: 07.11.2007

(84) Benannte Vertragsstaaten:
AT BE BG CH CY CZ DE DK EE ES FI FR GB GR HU IE IS IT LI LT LU LV MC MT NL PL PT RO SE SI SK TR
Benannte Erstreckungsstaaten:
AL BA HR MK RS

(30) Priorität: 13.11.2006 DE 102006053308

(71) Anmelder: ROBERT BOSCH GMBH
70442 Stuttgart (DE)

(72) Erfinder: Graf, Gerald
71686, Remseck (DE)

(54) **Verfahren zur Fahrdynamikregelung eines Fahrzeugs**

(57) Es wird ein Verfahren und eine Vorrichtung angegeben zur Fahrdynamikregelung eines Fahrzeugs (1) mit den Schritten Erfassen der Ist-Gierrate ($\Psi_{Ist}$) des Fahrzeugs (1), Erfassen des Lenkradwinkels Lw des Fahrzeugs (1), Erfassen einer durch einen Fahrer des Fahrzeugs gewünschten Wunsch-Gierrate ($\Psi_{Wunsch}$), Bilden eines Lenküberzieh-Quotienten aus der Wunsch-Gierrate ($\Psi_{Wunsch}$) und der Ist-Gierrate ($\Psi_{Ist}$) und Berechnen einer maximal zulässigen Soll-Gierrate ($\Psi_{Soll}$) des Fahrzeugs (1) aus mindestens einer weiteren Zustandsgröße des Fahrzeugs (1), wobei vorgeschlagen wird, dass eine Instabilitätsbedingung überprüft wird, die erfüllt ist, falls der Lenküberzieh-Quotient größer ist als ein erster Schwellenwert ($e_1$) und die Ist-Gierrate ($\Psi_{Ist}$) um mindestens einen zweiten Schwellenwert ($e_2$) größer ist als die Soll-Gierrate ($\Psi_{Soll}$), und wobei weiter vorgeschlagen wird, dass bei Erfüllen der Instabilitätsbedingung Bremseingriffe an zwei Vorderrädern (6, 7) des Fahrzeugs (1) erfolgen.

Fig. 2

EP 1 920 982 A1

## Beschreibung

Stand der Technik

Die vorliegende Erfindung betrifft ein Verfahren sowie eine Vorrichtung zur Fahrdynamikregelung eines Fahrzeugs, wobei die Ist-Gierrate des Fahrzeugs und eine durch einen Fahrer des Fahrzeugs gewünschte Wunsch-Gierrate erfasst wird, aus der Wunsch-Gierrate und der Ist-Gierrate ein Lenküberzieh-Quotient gebildet wird und aus mindestens einer weiteren Zustandsgröße des Fahrzeugs eine maximal zulässige Soll-Gierrate des Fahrzeugs berechnet wird.

Die gattungsgemäßen Verfahren und Vorrichtungen zur Fahrdynamikregelung werden auch als ESP-(Markenname)-Fahrdynamikregler bezeichnet. Eine herkömmliche Vorgehensweise der ESP-Fahrdynamikregler ist es, bei einem übersteuernden Fahrzeug die kurvenäußeren Räder oder wenigstens das kurvenäußere vordere Rad abzubremsen, um ein dem Übersteuern entgegenwirkendes stabilisierendes Giermoment auf das Fahrzeug aufzubringen. Hierbei bedeutet Übersteuern, dass der Schräglaufwinkel der Hinterräder größer ist als der Schräglaufwinkel der Vorderräder. Im gegenteiligen Fall eines untersteuernden Fahrzeugs wird das kurveninnere hintere Rad abgebremst, um wiederum ein dem Untersteuern entgegenwirkendes Giermoment zu erzeugen.

Weiterhin ist es bekannt, den vom Fahrer vorgegebenen Lenkeinschlag mit einer gemessenen Gierrate des Fahrzeugs zu vergleichen. Falls der Quotient aus diesen beiden Größen über einen bestimmten Schwellenwert ansteigt, wird ein exzessiver Lenkeinschlag (überzogene Lenkung) durch den Fahrer erkannt. In diesem Fall wird das Fahrzeug durch einen Bremseingriff gezielt verzögert, um durch eine Geschwindigkeitsreduktion einen minimalen Kurvenradius zu erreichen. Diese Verzögerung erfolgt mit gleichem Bremsdruck an allen vier Rädern oder es erfolgt eine seitenkraftoptimale Verzögerung an drei Rädern.

Nachteilig an den beschriebenen Verfahren ist, dass keine Möglichkeit besteht, auf eine überzogene Lenkung im Fall eines übersteuernden Fahrzeugs geeignet zu reagieren, um die Fahrstabilität zu verbessern.

Offenbarung der Erfindung

Eine Aufgabe der vorliegenden Erfindung ist es daher, ein Verfahren und eine Vorrichtung bereitzustellen, mit denen die Verfahren und Vorrichtungen nach dem Stand der Technik verbessert werden, wobei insbesondere ein Ansatz zur Fahrdynamikregelung geschaffen werden soll, mit dem im Übersteuerfall bei exzessiven Lenkbewegungen die Fahrstabilität verbessert wird.

Die Aufgabe wird gelöst durch ein Verfahren zur Fahrdynamikregelung eines Fahrzeugs mit den Schritten: Erfassen der Ist-Gierrate des Fahrzeugs, Erfassen einer durch einen Fahrer des Fahrzeugs gewünschten Wunsch-Gierrate, Bilden einer die Lenküberziehung kennzeichnenden Lenküberzieh-Größe, insbesondere eines Lenküberzieh-Quotienten, aus der Wunsch-Gierrate und der Ist-Gierrate, Berechnen einer maximal zulässigen Soll-Gierrate des Fahrzeugs aus mindestens einer weiteren Zustandsgröße des Fahrzeugs, gekennzeichnet durch Überprüfen einer Instabilitätsbedingung, die erfüllt ist, falls der Lenküberzieh-Quotient größer ist als ein erster Schwellenwert und die Ist-Gierrate um mindestens einen zweiten Schwellenwert größer ist als die Soll-Gierrate, und Bremseingriffe an zwei Vorderrädern des Fahrzeugs, falls die Instabilitätsbedingung erfüllt ist. Dabei umfasst der Ausdruck "Bremseingriff an zwei Vorderrädern" einen Bremseingriff ausschließlich an den beiden Vorderrädern und auch einen Bremseingriff an allen vier Rädern eines Fahrzeugs mit zwei Vorder- und zwei Hinterrädern. Der erste Schwellenwert ist vorzugsweise so gewählt, dass erst eine Abweichung von mehr als 10% und noch bevorzugter mehr als 20% der Wunsch-Gierrate gegenüber der Ist-Gierrate zu einer Aktivierung der erfindungsgemäßen Funktion führen. Ebenso ist der zweite Schwellenwert vorzugsweise für eine Abweichung der betroffenen Größen von mehr als 10% und noch bevorzugter mehr als 20% ausgelegt.

Das erfindungsgemäße Verfahren eignet sich besonders für Fahrzeuge mit zwei Vorderrädern und zwei Hinterrädern, wobei es alternativ auch bei Fahrzeugen mit lediglich einem Hinterrad oder einer anderen Anzahl von Hinterrädern einsetzbar ist. Die Vorderräder sind die durch die Lenkung betätigten Räder des Fahrzeugs. Durch die Bremseingriffe an beiden Vorderrädern des Fahrzeugs wird im Fall der überzogenen Lenkung, d. h. der Quotient aus Wunsch-Gierrate und Ist-Gierrate ist größer als der erste Schwellenwert, und gleichzeitigem Übersteuern des Fahrzeugs eine in vielfacher Hinsicht vorteilhafte Wirkung erreicht. Das Fahrzeug wird durch die Bremseingriffe verzögert, um es bei nachfolgend niedrigerer Geschwindigkeit mit einer einfacheren Gierstabilisierung zu stabilisieren. Weiterhin werden eventuelle Unfallfolgen minimiert. Vorzugsweise werden die Bremseingriffe so vorgenommen, dass neben der Fahrzeugverzögerung eine Gierstabilisierung bewirkt wird.

Die genannten Größen ergeben sich aus den folgenden Beziehungen. Die vom Fahrer gewünschte Wunsch-Gierrate $\Psi_{Wunsch}$ wird als Funktion aus dem vom Fahrer gewählten Lenkradwinkel $Lw$, der Fahrzeuggeometrie und der Fahrzeuggeschwindigkeit $v_{Fzg}$ ermittelt:

$$\Psi_{Wunsch} = f(Fahrzeuggeometrie,\ Lw,\ v_{Fzg})$$

Der Lenküberzieh-Quotient $k_{Überzieh}$ berechnet sich aus der Wunsch-Gierrate $\Psi_{Wunsch}$ und der von einem Gierratensensor gemessenen Ist-Gierrate $\Psi_{Ist}$, welche die tatsächliche Giergeschwindigkeit des Fahrzeugs wiedergibt:

$$k_{\ddot{U}berzieh} = \Psi_{Wunsch} / \Psi_{Ist}$$

Die Soll-Gierrate wird von einem ESP-Fahrdynamikregler auf bekannte Weise aus Raddrehgeschwindigkeiten, der Ist-Gierrate, der Querbeschleunigung und gegebenenfalls weiteren Größen berechnet.

Vorteilhafterweise erfolgen die Bremseingriffe so, dass das kurvenäußere Vorderrad mindestens so stark gebremst wird, wie das kurveninnere Vorderrad. Dies wird beispielsweise durch eine Vorgabe symmetrischer Soll-Bremsmomente für den Bremseingriff der Vorderräder erreicht. Dabei wird eine vorgegebene Soll-Verzögerung symmetrisch als gleiche Soll-Bremsmomente auf ein linkes und ein rechtes Rad verteilt, in diesem Fall jeweils das linke und das rechte Vorderrad. Bevorzugt wird, dass eine ebenfalls symmetrische Soll-Schlupfvorgabe (Begrenzung) vorgegeben wird, die im Bereich der Reifensättigung des Rades oder darüber liegen kann, um die Seitenführung der Räder zu reduzieren. Da die Lenkung überzogen ist, führt bereits ein geringes Soll-Bremsmoment zu einem hohen Bremsschlupf, da der Reifen sich bereits durch den hohen Reifenschräglauf nahe oder in der Sättigung befindet. Den symmetrischen Soll-Bremsmomenten oder den symmetrischen Soll-Schlupfvorgaben werden vorteilhafterweise asymmetrische Soll-Bremsmomente oder asymmetrische Soll-Schlupfvorgaben überlagert, die so gewählt sind, dass das kurvenäußere Vorderrad stärker gebremst wird, als das kurveninnere Vorderrad, um eine Gierstabilisierung zu erreichen. Bei einem Bremseingriff ausschließlich an den Vorderrädern erfolgt dieser bevorzugt mit einer niedrigen bis mittleren Soll-Verzögerung für das Fahrzeug von maximal 5 m/s$^2$.

Die Bremseingriffe erfolgen vorzugsweise in Abhängigkeit von einer Soll-Verzögerung für das Fahrzeug, die aus dem Lenküberzieh-Quotienten oder einer Gaspedalstellung eines Gaspedals des Fahrzeugs berechnet wird. Mit steigendem Lenküberzieh-Quotienten wird eine steigende Soll-Verzögerung vorgegeben. Die Berücksichtigung der Gaspedalstellung ermöglicht eine weitergehende Berücksichtigung des Fahrerwunsches. So kann bei einem durch Gasgeben vom Fahrer beabsichtigten Übersteuern das Fahrzeugs (Ausbrechen des Hecks) der Bremseingriff vermindert erfolgen oder ausgesetzt werden, beispielsweise so lange das Gaspedal durch den Fahrer betätigt bleibt. Aus der berechneten Soll-Verzögerung werden geforderte Radmomente berechnet, die als Soll-Bremsmomente für eine Bremsregelung der Vorderräder ausgegeben werden.

Vorteilhafterweise wird bei einer weiteren Eingriffsstrategie zusätzlich zu den Vorderrädern zumindest ein Hinterrad, vorzugsweise beide Hinterräder abgebremst, falls die oben genannte Instabilitätsbedingung erfüllt ist. Dadurch wird eine starke Bremswirkung erzielt, wobei vorzugsweise eine hohe Soll-Verzögerung, beispielsweise mindestens 8 oder 9 m/s$^2$, vorgegeben wird, um bei allen gebremsten Rädern die Blockiergrenze zu erreichen. Dies entspricht im wesentlichen einer automatisch, d.h. unabhängig von einer Betätigung eines Bremspedals durch den Fahrer, eingeleiteten Notbremsung.

In einer vorteilhaften Ausführungsform der Erfindung erfolgt der Hinterrad-Bremseingriff an einem oder beiden Hinterrädern bei einem Erreichen einer Soll-Schlupfvorgabe an zumindest einem der zwei Vorderräder oder bei einem Erfassen einer Fahrsicherheits-kritischen Situation. Vorzugsweise erfolgt der Bremseingriff an den Hinterrädern nur bei einem Erreichen einer Soll-Schlupfvorgabe an zumindest einem der zwei Vorderräder oder bei einem Erfassen einer Fahrsicherheits-kritischen Situation. An den Vorderrädern kann die Soll-Schlupfvorgabe besonders dann erreicht werden, wenn die Fahrbahn einen niedrigen Reibwert aufweist. In diesem Fall ist die zusätzliche Bremswirkung der Hinterräder vorteilhaft und es kann ein Übergang von dem Bremseingriff an den Vorderrädern zu einem Bremseingriff an zusätzlich mindestens einem Hinterrad auch bei einer niedrigen vorgegebenen Soll-Verzögerung vorgenommen werden. Bei Erkennen einer Fahrsicherheits-kritischen Situation, d.h. einer Situation, bei der von einem akuten Verlust der Kontrolle des Fahrers über das Fahrzeug ausgegangen werden kann, wird vorzugsweise eine automatische Notbremsung eingeleitet, bei der die Hinterräder zusätzlich zu den Vorderrädern gebremst werden. Der Verlust der Kontrolle kann beispielsweise daran erkannt werden, dass der Fahrer das Lenkrad des Fahrzeugs in schneller Abfolge hin- und herbewegt. Die Bremsung erfolgt vorteilhafterweise so, dass die Bremseingriffe an den zwei Vorderrädern und der Hinterrad-Bremseingriff in Abhängigkeit einer Sollverzögerung für das Fahrzeug erfolgen, die so gewählt ist, dass eine maximal zulässige Verzögerung des Fahrzeugs erreicht wird. Dies wird üblicherweise erreicht, indem eine hohe Soll-Verzögerung (mindestens 8 oder 9 m/s$^2$) vorgegeben wird, die von einer Schlupfregelung überlagert wird. Die Soll-Schlupfvorgaben der Schlupfregelung werden dabei gewählt, so dass das Fahrzeug stabilisiert wird. Die maximal zulässige Verzögerung entspricht der Verzögerung, mit der das Fahrzeug gebremst werden kann, ohne dass es zu einem zusätzlichen Stabilitätsverlust kommt.

Bevorzugt wird, dass die Soll-Schlupfvorgabe für das kurvenäußere Vorderrad größer ist als die Soll-Schlupfvorgabe für das kurveninnere Vorderrad oder größer ist als die Soll-Schlupfvorgabe für das Hinterrad, insbesondere das kurveninnere Hinterrad. Auf diese Weise wird zusätzlich ein maximal stabilisierendes Gier-Moment durch die unterschiedlichen Soll-Schlupfvorgaben mit den damit einhergehenden Bremswirkungen erzielt.

Falls nach Aktivierung des erfindungsgemäßen Verfahrens oder während des Bremseingriffs festgestellt wird, dass die Ist-Gierrate den zweiten Schwellenwert unterschreitet, d. h. die Ist-Gierrate nähert sich der zulässigen Soll-Gierrate, wird die Instabilitätsbedingung nicht mehr erfüllt. Dennoch ist die Fahrstabilität des Fahrzeugs weiterhin kritisch, falls der Lenküberzieh-Quotient noch über dem ersten Schwellenwert liegt, wobei dies bedeutet, dass der Fahrer für die momentane Fahrsituation die Lenkung zu weit eingeschlagen hat. In diesem Fall geht das erfindungsgemäße Verfahren vorzugsweise auf einen seitenkraftoptimalen Bremseingriff an den Rädern über. Dabei werden bei weiter überzogener Lenkung die Bremsmomente so auf zumindest drei Räder verteilt, dass das maximale Seitenführungspotential ausgenutzt wird.

Das eingangs genannte Problem wird auch gelöst durch ein Computerprogrammprodukt mit Programmcode zur Durchführung aller Schritte nach einem erfindungsgemäßen Verfahren, wenn das Programm in einem Computer ausgeführt wird, sowie durch eine Vorrichtung, insbesondere ein Steuergerät, mit Mitteln zur Fahrdynamikregelung eines Fahrzeugs gemäß dem nebengeordneten Anspruch. Bevorzugte Ausführungsformen der Vorrichtung machen von den oben im Zusammenhang mit den erfindungsgemäßen Verfahren genannten Merkmalen Gebrauch.

Kurze Beschreibung der Zeichnungen

Nachfolgend wird ein Ausführungsbeispiel der vorliegenden Erfindung anhand der beiliegenden Zeichnungen näher erläutert. Dabei zeigen:

Fig. 1      eine Skizze eines Regelungssystems zur Fahrdynamikregelung;

Fig. 2      ein Ablaufdiagramm eines erfindungsgemäßen Verfahrens.

Ausführungsform der Erfindung

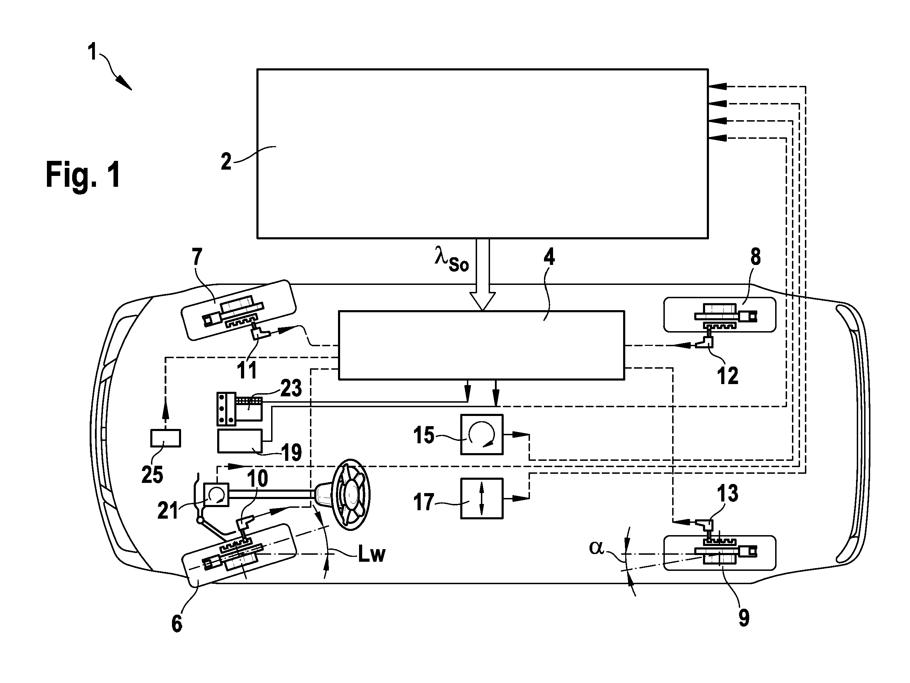

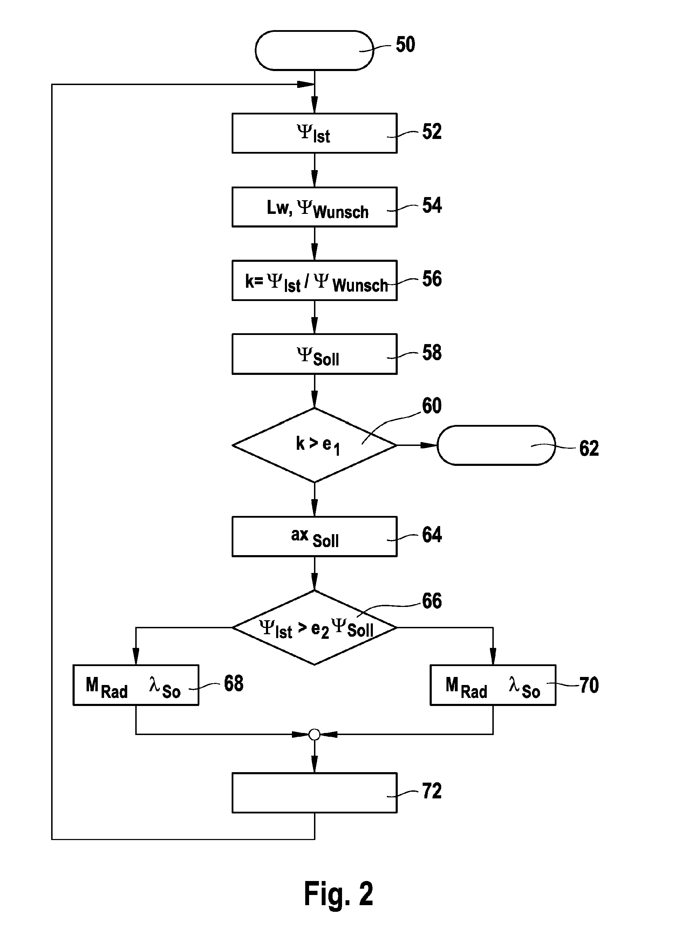

Fig. 1 zeigt ein Fahrzeug 1 mit einem Fahrdynamikregler 2, in den verschiedene Zustandsgrößen des Fahrzeugs eingespeist werden. Der Fahrdynamikregler 2 ist mit einem Schlupfregler 4 verbunden, der die Schlupfregelung der vier Räder in 6 bis 9 übernimmt. Dazu ist der Schlupfregler 4 mit vier Raddrehzahlsensoren 10 bis 13 verbunden, die jeweils die Drehbewegung der Räder 6 bis 9 erfassen. Die so ermittelten Bewegungsgrößen der Räder 6 bis 9 werden auch an den Fahrdynamikregler 2 übertragen. Weiterhin ist der Fahrdynamikregler 2 eingangsseitig mit einem Gierratensensor 15, einem Querbeschleunigungssensor 17, einer Motorsteuereinheit 19 und einem Lenkradwinkelsensor 21 verbunden. Der Schlupfregler 4 ist ausgangsseitig ebenfalls mit der Motorsteuereinheit 19 verbunden, um auf das Antriebsmoment des Fahrzeugs 1 einwirken zu können. Weiterhin ist der Schlupfregler 4 mit einer Bremshydraulik 23 und einem Vordrucksensor 25 der Bremshydraulik 23 verbunden, um gezielt Bremseingriffe an den Rädern 6 bis 9 vornehmen zu können. Der Vordrucksensor 25 dient einer Verbesserung der Leistungsfähigkeit der Bremsanlage, wobei die Erfindung auch bei Bremsanlagen ohne Vordrucksensor 25 eingesetzt werden kann. Die Funktionsweise der in der Fig. 1 dargestellten Komponenten wird im Folgenden im Zusammenhang mit der Fig. 2 erläutert. Anzumerken ist, dass das dargestellte System mit den gezeigten Vorrichtungen dem Fachmann in weiten Bereichen bekannt ist. Die erfindungsgemäßen Besonderheiten werden im Folgenden eingehender erläutert.

Die Fig. 2 zeigt ein erfindungsgemäßes Verfahren zur Fahrdynamikregelung mit der in der Fig. 1 gezeigten Anordnung, wobei auch auf die Fig.1 Bezug genommen wird, um das Verfahren näher zu erläutern. Das Verfahren startet mit einem Schritt 50. Anschließend wird in einem Schritt 52 mit dem Gierratensensor 15 eine Ist-Gierrate $\Psi_{Ist}$ erfasst. In einem Schritt 54 wird aus einem durch den Lenkradwinkelsensor 21 gemessenen Lenkradwinkel $Lw$ eine Wunsch-Gierrate $\Psi_{Wunsch}$ unter Berücksichtigung der Fahrzeuggeometrie und der Fahrzeuggeschwindigkeit $v_{Fzg}$ berechnet. Sodann wird in einem Schritt 56 aus der Wunsch-Gierrate $\Psi_{Wunsch}$ und der Ist-Gierrate $\Psi_{Ist}$ der Lenküberzieh-Quotient $k_{Überzieh}$ als Grad für eine überzogene Lenkung gebildet:

$$k_{Überzieh} = \Psi_{Wunsch} \, / \, \Psi_{Ist}$$

Weiterhin wird in einem Schritt 58 eine maximal zulässige Soll-Gierrate $\Psi_{Soll}$ berechnet, wobei die Messgrößen der Raddrehzahlsensoren 10 bis 13, des Gierratensensors 15 und des Querbeschleunigungssensors 17 berücksichtigt werden. Diese Funktion ist aus dem ESP-System bekannt und wird nicht näher erläutert.

In einem Schritt 60 wird überprüft, ob der Lenküberzieh-Quotient $k_{Überzieh}$ größer ist als ein erster Schwellenwert $e_1$. Diese Bedingung bezüglich des Lenküberzieh-Quotienten $k_{Überzieh}$ betrifft die Lenkvorgabe des Fahrers. Sie ist erfüllt, falls der Fahrer mit dem Lenkradwinkel Lw eine deutlich engere Kurvenfahrt wünscht, als mit der Ist-Gierrate $\Psi_{Ist}$ gemessen wird. Falls diese Bedingung nicht erfüllt wird, wird das erfindungsgemäße Verfahren im Schritt 62 beendet und es wird mit dem allgemeinen, bekannten ESP-Programm fortgefahren. Der Schwellenwert $e_1$ ist so gewählt, dass erst eine Abweichung von vorzugsweise mehr als 10% zu einer Aktivierung der im Folgenden beschriebenen Funktion des Schrittes 64 führt.

Falls die Bedingung des Schritts 60 erfüllt wird, erfolgt in einem Schritt 64 eine Vorbereitung eines Bremseingriffs zur Verzögerung des Fahrzeugs. Hierzu wird in Abhängigkeit von dem Grad der überzogenen Lenkung, d. h. dem Lenküberzieh-Quotienten $k_{Überzieh}$, und der Gaspedalstellung des Fahrzeugs eine Soll-Verzögerung

$$ax_{Soll} = f(k_{überzieh}, \text{Gaspedalstellung})$$

berechnet. In einem folgenden Schritt 66 wird zwischen Übersteuern, wobei die Soll-Gierrate $\Psi_{Soll}$ größer ist als die Ist-Gierrate $\Psi_{Ist}$ multipliziert mit einem zweiten Schwellenwert $e_2$ (hier: $e_2 = 1,1$), und Unter- oder Neutralsteuern, wobei die Soll-Gierrate $\Psi_{Soll}$ kleiner oder gleich der Ist-Gierrate $\Psi_{Ist}$ multipliziert mit dem zweiten Schwellenwert $e_2$ ist, unterschieden. Liegt ein Übersteuern des Fahrzeugs 1 vor, so werden in einem Schritt 68 Soll-Bremsmomente $M_{Rad}$ für die Vorderräder 6 und 7 oder alle vier Räder 6 bis 9 berechnet, wobei zunächst die erste Strategie beschrieben wird, bei der nur die beiden Vorderräder 6 und 7 gebremst werden. Damit ergeben sich die einzelnen Soll-Bremsmomente $M_{Rad}$ zu

$$M_{Rad} = (m_{Fzg} * ax_{Soll} * r_{Rad})/2$$

Diese Soll-Bremsmomente $M_{Rad}$ für die Vorderräder 6 und 7 werden dem Schlupfregler 4 übergeben. Gleichzeitig wird dem Schlupfregler 4 eine hohe Soll-Schlupfvorgabe $\lambda_{So}$ vorgegeben, um eine Reduktion der Seitenführung der Vorderräder 6 und 7 zu erlangen. In einem Schritt 72 führt der Schlupfregler 4 dann die Bremseingriffe an den Vorderrädern 6 und 7 entsprechend aus.

Bei einer Ausführung der anderen, zweiten Bremsstrategie werden im Schritt 68 Soll-Bremsmomente $M_{Rad}$ für alle vier Räder 6 bis 9 aus der Soll-Verzögerung $ax_{Soll}$ berechnet, wobei die Verteilung wiederum symmetrisch erfolgt. Zusätzlich werden das kurvenäußere Vorderrad 7 mit einer hohen Soll-Schlupfanforderung $\lambda_{So7}$ und das kurveninnere Hinterrad 9 mit einer geringen Soll-Schlupfanforderung $\lambda_{So9}$ beaufschlagt. Für die beiden übrigen Räder 6 und 8 wird eine mittlere Soll-Schlupfanforderung $\lambda_{So6,8}$ vorgegeben. Dadurch wird zusätzlich eine stabilisierende Wirkung erzielt. Weiterhin ist bei einer dritten Ausführungsform eine Wahl oder ein Wechsel zwischen den beiden Bremsstrategien in Abhängigkeit von der Fahrsituation und dem Verhalten des Fahrers möglich. So wird als Voreinstellung die erste Bremsstrategie gewählt und die zweite Bremsstrategie gewählt, falls ein Kontrollverlust durch den Fahrer erkannt wird oder sich das Fahrzeug auf einem Untergrund mit niedrigem Reibbeiwert befindet. Zusätzlich wird bei Erkennen eines Kontrollverlustes die Soll-Verzögerung $a_{XSoll}$ erhöht, um eine maximal mögliche Verzögerung (Notbremsung) zu erreichen.

Falls im Schritt 66 ein Unter- oder Neutral-Steuern des Fahrzeugs festgestellt wird, springt das Verfahren nicht zum Schritt 68, sondern zu einem Schritt 70, bei dem der Fahrdynamikregler 2 in einem Schritt 74 einen seitenkraftoptimierten Bremseingriff für den Schlupfregler 4 vorgibt. Die Bremsmomente werden durch den Schlupfregler 4 so auf die Räder 6 bis 9 verteilt, dass das maximale Seitenführungspotential ausgenutzt wird. Dies geschieht durch Vorgabe eines jeweiligen maximalen Soll-Schlupfes $\lambda_{So 6,7,8,9}$ für die Räder 6 bis 9. Der Bremseingriff erfolgt wiederum im Schritt 72.

Nach dem Schritt 72 springt das Verfahren zu dem Schritt 52 zurück. Dadurch, dass die dargestellte Schleife wiederholt wird, kann es bei weiter überzogener Lenkung (Schritt 60), jedoch inzwischen nicht mehr stark übersteuerndem Fahrzeug 1 (Schritt 66) dazu kommen, dass während des Bremseingriffs ein Wechsel auf einen seitenkraftoptimalen Bremseingriff (Schritt 70) vorgenommen wird, bevor die Schleife verlassen wird (Schritt 62).

**Patentansprüche**

1. Verfahren zur Fahrdynamikregelung eines Fahrzeugs (1) mit den Schritten:

    - Erfassen der Ist-Gierrate ($\Psi_{Ist}$) des Fahrzeugs (1),
    - Erfassen einer durch einen Fahrer des Fahrzeugs gewünschten Wunsch-Gierrate ($\Psi_{Wunsh}$),
    - Bilden einer Lenküberzieh-Größe, insbesondere eines Lenküberzieh-Quotienten ($k_{Überzieh}$), aus der Wunsch-Gierrate ($\Psi_{Wunsch}$) und der Ist-Gierrate ($\Psi_{Ist}$) und
    - Berechnen einer maximal zulässigen Soll-Gierrate ($\Psi_{Soll}$) des Fahrzeugs (1) aus mindestens einer weiteren Zustandsgröße des Fahrzeugs (1),

    **gekennzeichnet durch** die Schritte:

    - Überprüfen einer Instabilitätsbedingung, die erfüllt ist, falls die Lenküberzieh-Größe ($k_{Überzieh}$) größer ist als ein erster Schwellenwert ($e_1$) und die Ist-Gierrate ($\Psi_{Ist}$) um mindestens einen zweiten Schwellenwert ($e_2$) größer ist als die Soll-Gierrate ($\Psi_{Soll}$) ist, und
    - Bremseingriffe an zwei Vorderrädern (6, 7) des Fahrzeugs (1), falls die Instabilitätsbedingung erfüllt ist.

2. Verfahren nach Anspruch 1, **dadurch gekennzeichnet, dass** die Bremseingriffe so erfolgen, dass das kurvenäußere Vorderrad (7) mindestens so stark gebremst wird, wie das kurveninnere Vorderrad (6).

3. Verfahren nach Anspruch 1 oder 2, **dadurch gekennzeichnet, dass** die Bremseingriffe in Abhängigkeit einer Sollverzögerung $(ax_{Soll})$ für das Fahrzeug (1) erfolgen, die aus dem Lenküberzieh-Quotienten $(k_{Überzieh})$ und/oder aus der Gaspedalstellung eines Gaspedals des Fahrzeugs (1) berechnet wird.

4. Verfahren nach einem der vorhergehenden Ansprüche, **dadurch gekennzeichnet, dass** ein Hinterrad-Bremseingriff an zumindest einem Hinterrad (8, 9) des Fahrzeugs (1) erfolgt.

5. Verfahren nach Anspruch 4, **dadurch gekennzeichnet, dass** der Hinterrad-Bremseingriff bei einem Erreichen einer Soll-Schlupfvorgabe $(\lambda_{So})$ an zumindest einem der zwei Vorderräder (6, 7) oder bei einem Erfassen einer Fahrsicherheits-kritischen Situation erfolgt.

6. Verfahren nach Anspruch 4 oder 5, **dadurch gekennzeichnet, dass** die Bremseingriffe an den zwei Vorderrädern und der Hinterrad-Bremseingriff in Abhängigkeit einer Sollverzögerung $(ax_{Soll})$ für das Fahrzeug (1) erfolgen, die so gewählt ist, dass eine maximal zulässige Verzögerung des Fahrzeugs (1) erreicht wird.

7. Verfahren nach einem der Ansprüche 4 bis 6, **dadurch gekennzeichnet, dass** eine Soll-Schlupfvorgabe $(\lambda_{So7})$ für das kurvenäußere Vorderrad (7) größer ist als eine Soll-Schlupfvorgabe $(\lambda_{So6})$ für das kurveninnere Vorderrad (6) oder größer ist als eine Soll-Schlupfvorgabe $(\lambda_{So\,8,9})$ für das Hinterrad (8, 9).

8. Verfahren nach einem der vorhergehenden Ansprüche, **gekennzeichnet durch** den folgenden Schritt nach dem Beginn des Bremseingriff-Schritts: Vornahme eines seitenkraftoptimalen Bremseingriffs an den Vorderrädern (6,7) und an Hinterrädern des Fahrzeugs (8,9), falls die Ist-Gierrate $(\Psi_{Ist})$ den zweiten Schwellenwert $(e_2)$ unterschritten hat und der Lenk-Überziehquotient $(k_{Überzieh})$ noch über dem ersten Schwellenwert $(e_1)$ liegt.

9. Computerprogrammprodukt mit Programmcode zur Durchführung der Schritte nach einem der Ansprüche 1 bis 8, wenn das Programm auf einem Computer ausgeführt wird.

10. Vorrichtung, insbesondere Steuergerät, mit Mitteln zur Fahrdynamikregelung eines Fahrzeugs mit den Schritten:

   - Erfassen der Ist-Gierrate $(\Psi_{Ist})$ des Fahrzeugs (1),
   - Erfassen einer durch einen Fahrer des Fahrzeugs gewünschten Wunsch-Gierrate $(\Psi_{Wunsch})$,
   - Bilden einer Lenküberzieh-Größe, insbesondere eines Lenküberzieh-Quotienten $(k_{Überzieh})$, aus der Wunsch-Gierrate $(\Psi_{Wunsch})$ und der Ist-Gierrate $(\Psi_{Ist})$ und
   - Berechnen einer maximal zulässigen Soll-Gierrate $(\Psi_{Soll})$ des Fahrzeugs aus mindestens einer weiteren Zustandsgröße des Fahrzeugs (1),

   **gekennzeichnet durch** die Schritte:

   - Überprüfen einer Instabilitätsbedingung, die erfüllt ist, falls die Lenküberzieh-Größe $(k_{Überzieh})$ größer ist als ein erster Schwellenwert $(e_1)$ und die Ist-Gierrate $(\Psi_{Ist})$ um mindestens einen zweiten Schwellenwert $(e_2)$ größer ist als die Soll-Gierrate $(\Psi_{Soll})$, und
   - Bremseingriffe an zwei Vorderrädern (6, 7) des Fahrzeugs (1), falls die Instabilitätsbedingung erfüllt ist.

Fig. 1

Fig. 2

**Europäisches Patentamt**

**EUROPÄISCHER RECHERCHENBERICHT**

Nummer der Anmeldung

EP 07 12 0142

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 6 089 680 A (YOSHIOKA TOHRU [JP] ET AL) 18. Juli 2000 (2000-07-18) * Spalte 7, Zeile 7 - Spalte 11, Zeile 65; Abbildungen 1,3,6-10 * | 1,4-7,9, 10 | INV. B60T8/1755 |
| X | US 2002/143451 A1 (HAC ALEKSANDER B [US] ET AL) 3. Oktober 2002 (2002-10-03) * Seite 9, Absatz 126 - Seite 9, Absatz 132; Abbildungen 1A,1B * | 1,8-10 | |
| Y | | 2-7 | |
| Y | US 5 702 165 A (KOIBUCHI KEN [JP]) 30. Dezember 1997 (1997-12-30) * Spalte 8, Zeile 48 - Spalte 12, Zeile 3; Abbildung 7 * | 2-6 | |
| Y | DE 38 40 456 A1 (BOSCH GMBH ROBERT [DE]) 7. Juni 1990 (1990-06-07) * Spalte 2, Zeile 16 - Spalte 2, Zeile 35 * | 4,7 | |
| A | DE 100 45 218 A1 (BOSCH GMBH ROBERT [DE]) 22. März 2001 (2001-03-22) * Spalte 5, Zeile 19 - Zeile 50 * * Spalte 13, Zeile 24 - Spalte 13, Zeile 45; Abbildung 1 * | 1-10 | **RECHERCHIERTE SACHGEBIETE (IPC)** B60T |
| A | US 6 074 020 A (TAKAHASHI AKIRA [JP] ET AL) 13. Juni 2000 (2000-06-13) * Spalte 4, Zeile 35 - Spalte 7, Zeile 36 * | 1-10 | |

Der vorliegende Recherchenbericht wurde für alle Patentansprüche erstellt

| Recherchenort | Abschlußdatum der Recherche | Prüfer |
|---|---|---|
| München | 26. Februar 2008 | Marx, Winfried |

EPO FORM 1503 03.82 (P04C03)

**EP 1 920 982 A1**

**ANHANG ZUM EUROPÄISCHEN RECHERCHENBERICHT
ÜBER DIE EUROPÄISCHE PATENTANMELDUNG NR.**

EP 07 12 0142

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

26-02-2008

| Im Recherchenbericht angeführtes Patentdokument | | Datum der Veröffentlichung | Mitglied(er) der Patentfamilie | | Datum der Veröffentlichung |
|---|---|---|---|---|---|
| US 6089680 | A | 18-07-2000 | DE | 19813736 A1 | 15-10-1998 |
| | | | JP | 10264798 A | 06-10-1998 |
| US 2002143451 | A1 | 03-10-2002 | KEINE | | |
| US 5702165 | A | 30-12-1997 | DE | 19619476 A1 | 21-11-1996 |
| | | | JP | 3303605 B2 | 22-07-2002 |
| | | | JP | 8310366 A | 26-11-1996 |
| DE 3840456 | A1 | 07-06-1990 | WO | 9006251 A1 | 14-06-1990 |
| | | | EP | 0446234 A1 | 18-09-1991 |
| | | | US | 5188434 A | 23-02-1993 |
| DE 10045218 | A1 | 22-03-2001 | AU | 766182 B2 | 09-10-2003 |
| | | | AU | 7644700 A | 17-04-2001 |
| | | | WO | 0119652 A1 | 22-03-2001 |
| | | | EP | 1131235 A1 | 12-09-2001 |
| | | | JP | 2003509272 T | 11-03-2003 |
| | | | US | 6658343 B1 | 02-12-2003 |
| US 6074020 | A | 13-06-2000 | DE | 19651760 A1 | 19-06-1997 |
| | | | GB | 2308167 A | 18-06-1997 |
| | | | JP | 9156487 A | 17-06-1997 |

EPO FORM P0461

Für nähere Einzelheiten zu diesem Anhang : siehe Amtsblatt des Europäischen Patentamts, Nr.12/82